# FASCICULE DE BREVET EUROPEEN

(11) **EP 3 412 245 B1**
(45) Date de publication et mention de la délivrance du brevet: **22.01.2020**
(21) Numéro de dépôt: 18175829.3
(22) Date de dépôt: 04.06.2018
(51) Int. Cl.: A61C 7/08, A61C 7/00

(54) **PROCÉDÉ D'ÉVALUATION D'UNE GOUTIÈRE ORTHODONTIQUE**
VERFAHREN ZUM BEURTEILEN EINER KIEFERORTHOPÄDISCHEN SCHIENE
PROCESS FOR EVALUATING AN ORTHODONTIC SPLINT

(30) Priorité: 09.06.2017 FR 1755187
(43) Date de publication de la demande: 12.12.2018
(73) Titulaire: Dental Monitoring, 75008 Paris (FR)
(72) Inventeur: SALAH, Philippe, 93170 BAGNOLET (FR); PELLISSARD, Thomas, 92110 CLICHY (FR); GHYSELINCK, Guillaume, 59169 CANTIN (FR); DEBRAUX, Laurent, 75020 PARIS (FR)
(74) Mandataire: Nony

(56) Documents cités:
- WO-A1-2016/066637
- US-A1- 2010 068 672

## Description

### Domaine technique

La présente invention concerne un procédé d'évaluation de la forme d'une gouttière orthodontique, ou « aligneur », portée par un patient, en particulier pour évaluer la conformité de la forme de la gouttière orthodontique au positionnement des dents dudit patient. La description divulgue aussi un procédé d'adaptation d'un traitement au moyen de gouttières orthodontiques. La description divulgue enfin un programme informatique pour la mise en œuvre de ces procédés.

### Etat de la technique

Classiquement, au début d'un traitement orthodontique, l'orthodontiste détermine le positionnement des dents qu'il souhaite obtenir à un instant du traitement, dit "set-up ". Le set-up peut être défini au moyen d'une empreinte ou à partir d'un scan tridimensionnel des dents du patient. L'orthodontiste fabrique alors, en conséquence, un appareil orthodontique adapté à ce traitement. Le document WO2016/066637 divulgue un procédé de contrôle d'un traitement orthodontique et un programme informatique pour la mise en œuvre de ce procédé.

L'appareil orthodontique peut être une gouttière orthodontique (« *aligner »* en anglais). Une gouttière se présente classiquement sous la forme d'un appareil monobloc amovible, classiquement en un matériau polymère transparent, qui comporte une goulotte conformée pour que plusieurs dents d'une arcade, généralement toutes les dents d'une arcade, puissent y être logées.

La forme de la goulotte est adaptée pour maintenir en position la gouttière sur les dents, tout en exerçant une action de correction du positionnement de certaines dents.

On détermine classiquement, au début du traitement, les formes que doivent prendre les différentes gouttières à différents moments du traitement, puis on fait fabriquer l'ensemble des gouttières correspondantes. A des instants prédéterminés, le patient change de gouttière.

Le traitement au moyen de gouttières est avantageusement peu contraignant pour le patient. En particulier, le nombre de rendez-vous chez l'orthodontiste est limité. En outre, la douleur est plus faible qu'avec un arc orthodontique métallique attaché aux dents.

Le marché des gouttières orthodontiques est donc en croissance.

A intervalles réguliers, le patient se déplace chez l'orthodontiste pour un contrôle visuel, notamment pour vérifier si le déplacement des dents est conforme aux attentes et si la gouttière portée par le patient est toujours adaptée au traitement.

Si l'orthodontiste diagnostique une inadaptation au traitement, il effectue une nouvelle empreinte des dents, ou, de manière équivalente, un nouveau scan tridimensionnel des dents, puis commande une nouvelle série de gouttières configurées en conséquence. On considère qu'en moyenne, le nombre de gouttières finalement fabriquées est d'environ 45, au lieu des 20 gouttières classiquement prévues au début du traitement.

La nécessité de devoir se déplacer chez l'orthodontiste est une contrainte pour le patient. La confiance du patient en son orthodontiste peut être également entamée. L'inadaptation peut être inesthétique. Enfin, il en résulte un coût supplémentaire.

Le nombre de visites de contrôle chez l'orthodontiste doit donc être limité.

Il existe un besoin pour des solutions répondant à ces problèmes.

Un but de l'invention est de répondre, au moins partiellement, à ce besoin.

### Résumé de l'invention

L'invention fournit un procédé d'évaluation de la forme d'une gouttière orthodontique portée par un patient, ledit procédé comportant les étapes suivantes :
1) acquisition d'au moins une image bidimensionnelle de dents dudit patient, dite « image actualisée », dans des conditions d'acquisition réelles,
   au moins une image actualisée, dite « image de gouttière », représentant au moins partiellement la gouttière dans une position de service dans laquelle elle est portée par lesdites dents;
   au moins une image actualisée, dite « image de dentition », identique ou différente de l'image de gouttière, représentant lesdites dents,
2) si l'image de dentition est différente de l'image de gouttière, transformation de l'image de dentition de manière qu'elle représente lesdites dents (représentées sur l'image de dentition) comme observées dans les conditions d'acquisition mises en œuvre lors de l'acquisition de l'image de gouttière à l'étape 1) ;
3) détermination pour chacune d'une pluralité de dents représentées sur les images de dentition et de gouttière, de contours de dent intérieur et extérieur représentant le contour de l'extrémité libre de ladite dent sur les images de dentition et de gouttière, respectivement ;
4) comparaison des contours de dents intérieur et extérieur, puis détermination d'au moins un score en fonction de ladite comparaison.

Comme on le verra plus en détail dans la suite de la description, un procédé selon l'invention facilite considérablement l'évaluation de la bonne adéquation de la gouttière au traitement, tout en rendant cette évaluation particulièrement fiable. En particulier, le procédé peut être mis en œuvre à partir de simples photographies ou films, pris sans précaution particulière, par exemple par le patient. Le nombre de rendez-vous chez l'orthodontiste peut donc être limité.

De préférence, un procédé d'évaluation selon l'invention présente encore une ou plusieurs des caractéristiques optionnelles suivantes :
- le procédé comporte, après l'étape 4), l'étape suivante :
   5) comparaison du score à un seuil d'acceptabilité et émission d'une information en fonction du résultat de la comparaison ;
- les images de dentition et de gouttière sont différentes et le procédé comporte les étapes suivantes :
   (a) avant l'étape 1), de préférence en début de traitement ou avant le début du traitement, réalisation d'un modèle tridimensionnel numérique d'au moins une partie d'une arcade portant lesdites dents, ou « modèle de référence initial », et pour chaque dent du modèle de référence initial, définition d'un modèle de référence tridimensionnel numérique de ladite dent, ou « modèle de dent » ;
   (b) modification du modèle de référence initial par déplacement des modèles de dent, jusqu'à obtention d'un modèle de référence final compatible avec l'image de dentition ;
   (c) recherche d'une vue bidimensionnelle du modèle de référence final compatible avec l'image de gouttière ;
   (d) transformation de l'image de dentition en ladite vue ;
- alternativement, les images de dentition et de gouttière sont une même image ;
- l'étape 4) comporte les étapes suivantes :
   pour chacune d'une pluralité de dents pour lesquelles des contours de dent intérieur et extérieur ont été déterminés ;
   i) détermination d'une distance entre les contours de dent intérieur et extérieur ;
   ii) détermination d'un seuil de distance, de préférence à partir des distances déterminées à l'étape i) ;
   iii) pour chacune desdites dents, détermination d'un score en distance, en fonction
      - de la distance entre les contours de dent intérieur et extérieur et
      - du seuil de distance ;
- lesdites distances sont mesurées en pixels ;
- à l'étape ii), le seuil de distance est fonction de la plus faible des distances déterminées à l'étape i) ;
- alternativement, l'étape 4) comporte les étapes suivantes :
   i') pour chaque couple d'une dent gauche et d'une dent droite adjacentes d'au moins un triplet de première, deuxième et troisième dents adjacentes pour chacune desquelles des contours de dent intérieur et extérieur ont été déterminés, les première et troisième dents étant adjacentes à la deuxième dent,
      détermination d'un décalage entre le contour de dent intérieur de ladite dent gauche et le contour de dent intérieur de ladite dent droite, dit « décalage intérieur », et détermination d'un décalage entre le contour de dent extérieur de ladite dent gauche et le contour de dent extérieur de ladite dent droite, dit « décalage extérieur »,
      puis
      détermination de la différence entre le décalage intérieur et le décalage extérieur, dite « différence de décalages » ;
   ii') détermination d'un seuil de différence de décalages, de préférence à partir des différences de décalages déterminées à l'étape i') ;
   iii') détermination, pour au moins une, de préférence pour chaque dent dudit triplet, d'au moins un score en décalage, en fonction de la différence de décalages avec une dent adjacente et du seuil de différence de décalages ;
- les décalages intérieurs et extérieurs sont mesurés en pixels ;
- à l'étape iii'), le seuil de différence de décalages est fonction de la plus petite des différences de décalages déterminées à l'étape i').

L'invention concerne aussi un procédé d'adaptation d'un traitement orthodontique, procédé dans lequel on met en œuvre un procédé d'évaluation selon l'invention, puis, en fonction du résultat de ladite évaluation, on fabrique une nouvelle gouttière.

La description divulgue également :
- un programme d'ordinateur, et en particulier un applicatif spécialisé pour téléphone mobile, comprenant des instructions de code de programme pour l'exécution d'une ou plusieurs, de préférence toutes les étapes 1) à 4), de préférence 1) à 5), lorsque ledit programme est exécuté par un ordinateur,
- un support informatique sur lequel est enregistré un tel programme, par exemple une mémoire ou un CD-ROM, et
- un appareil personnel, en particulier un téléphone mobile ou une tablette, dans lequel est chargé un tel programme.

La description divulgue aussi un système comportant :
- un scanner tridimensionnel apte à mettre en œuvre l'étape (a) décrite ci-après, et
- un appareil personnel, de préférence un téléphone mobile, chargé avec un programme selon l'invention.

### Définitions

Par « dentition », on entend un ensemble de dents.

Par « patient », on entend toute personne pour laquelle un procédé selon l'invention est mis en œuvre, que cette personne soit malade ou non.

Les « conditions d'acquisition » précisent la position et l'orientation dans l'espace d'un appareil d'acquisition d'images relativement aux dents du patient (conditions d'acquisition réelles) ou à un modèle tridimensionnel des dents du patient (conditions d'acquisition virtuelles), et de préférence la calibration de cet appareil d'acquisition d'images, et notamment les valeurs de l'ouverture de diaphragme, du temps d'exposition, de la distance focale et de la sensibilité. Des conditions d'acquisition sont dites "virtuelles", ou « théoriques », lorsqu'elles correspondent à une simulation dans laquelle l'appareil d'acquisition serait dans lesdites conditions d'acquisition (positionnement et de préférence calibration théoriques de l'appareil d'acquisition).

Un scanner 3D est un appareil permettant d'obtenir une représentation en trois dimensions d'un objet.

Par "image", on entend une image en deux dimensions, comme une photographie. Une image est formée de pixels.

Un modèle numérique tridimensionnel d'un ensemble de dents d'un patient est « compatible » avec une image lorsqu'il existe une vue de ce modèle qui correspond à ladite image, c'est-à-dire telle que les éléments dudit modèle, par exemple les contours des modèles de dents, sont positionnés, relativement les uns aux autres, comme les éléments réels qu'ils modélisent, par exemple les contours desdites dents, sur ladite image. Ainsi, un modèle de référence final est-il compatible avec une image de dentition si une vue du modèle de référence final permet d'observer les contours des modèles de dents de manière qu'ils soient superposables aux contours desdites dents sur ladite image de dentition.

Ladite vue peut être observée par un appareil d'acquisition d'images virtuel, dans des conditions d'acquisition virtuelles qui sont également qualifiées de « compatibles » avec l'image.

Lorsqu'un modèle numérique tridimensionnel est compatible avec une image, le positionnement des modèles de dents dans ce modèle est également qualifié de « compatible » avec l'image.

La « position de service » est la position dans laquelle la gouttière est portée par le patient.

« Comprendre », « comporter » ou « présenter » doivent être interprétés de manière large, non limitative, sauf indication contraire.

### Brève description des figures

D'autres caractéristiques et avantages de l'invention apparaîtront encore à la lecture de la description détaillée qui va suivre et à l'examen du dessin annexé dans lequel :
- les figures 1 et 2 représentent une gouttière orthodontique ;
- la figure 3 représente une image actualisée d'une arcade dentaire portant une gouttière orthodontique comme celle des figures 1 et 2 ;
- la figure 4 représente le contour de dentition défini à partir de l'image de la figure 3 ;
- la figure 5 représente les contours de gouttière définis à partir de l'image de la figure 3 et susceptibles d'être utilisés selon l'invention ;
- la figure 6 représente le contour de gouttière défini à partir de l'image de la figure 3 et utilisé sur les figures 7 et 8 pour être comparé à un contour de dentition ;
- les figures 7 et 8 représentent les contours de dentition et de gouttière des figures 4 et 6 tels que représentés sur l'image actualisée de la figure 3 ;
- la figure 9 illustre schématiquement un procédé selon l'invention ;
- la figure 10 illustre schématiquement l'étape 2) d'un procédé selon l'invention.

### Description détaillée

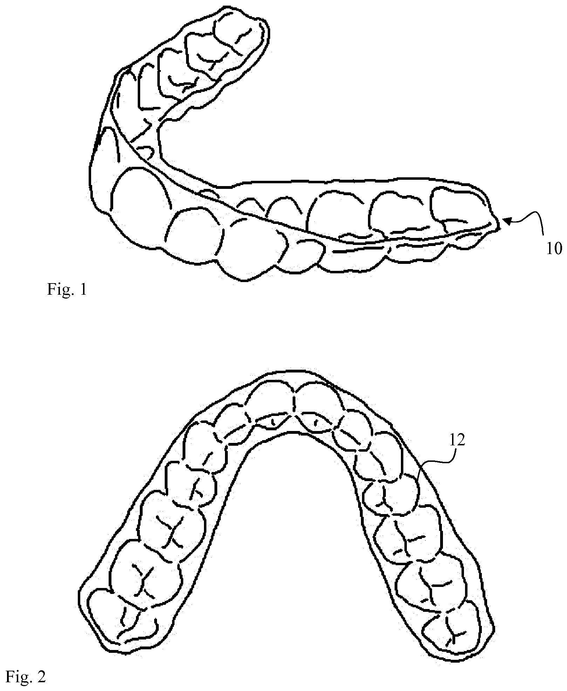

Comme représenté sur la figure 1, une gouttière 10 s'étend de manière à suivre les dents D successives de l'arcade sur laquelle elle est fixée. Elle définit une goulotte de forme générale en « U ».

On appelle « goulotte » 12 la surface intérieure de la gouttière. La forme de la goulotte est déterminée pour assurer la fixation de la gouttière sur les dents, mais également en fonction d'un positionnement cible souhaité pour les dents. Plus précisément, la forme est déterminée de manière que, lorsque la gouttière est dans sa position de service, elle exerce des contraintes tendant à déplacer les dents traitées vers leur positionnement cible.

Par « contour de dent», on entend une ligne présentant la forme d'une extrémité libre 22 d'une dent sur une image.

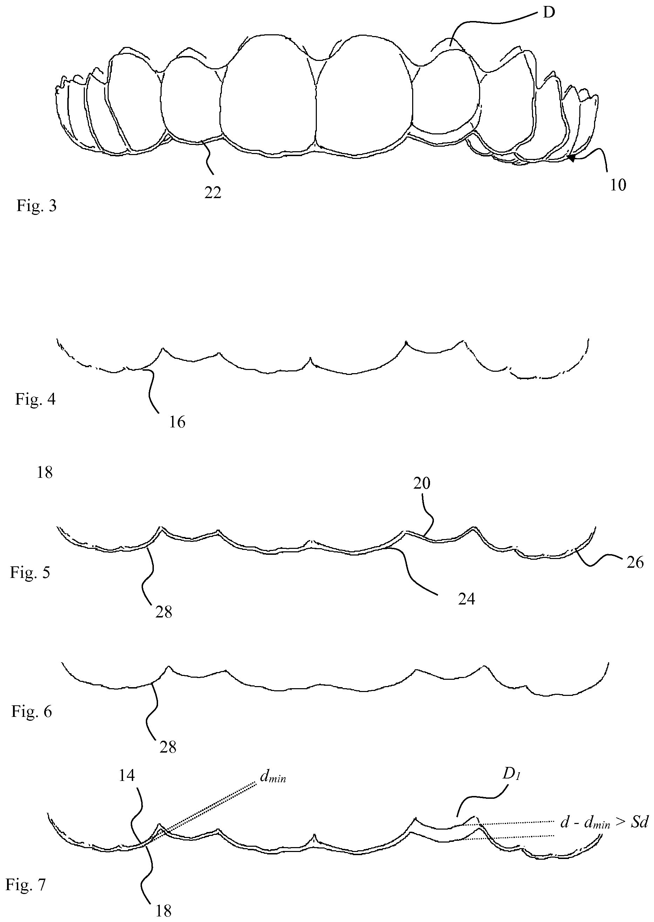

Bien entendu, une telle ligne peut délimiter l'extrémité libre de cette dent. Le contour de dent est alors qualifié de « contour de dent intérieur » 14. Un « contour de dentition » 16 est constitué par l'ensemble des contours de dent intérieurs d'un ensemble de dents (figure 4).

Une telle ligne peut également délimiter une partie de la gouttière. Le contour de dent est alors qualifié de « contour de dent extérieur » 18. En particulier, le fond 20 de la goulotte présente une forme sensiblement complémentaire à celle des extrémités libres 22 des dents. En conséquence, sur une image représentant le fond de la goulotte, le contour du fond de la goulotte définit un ensemble de contours de dents extérieurs 18.

La matière de la gouttière séparant la surface extérieure 24 de la gouttière et la goulotte 12 définit l'épaisseur de la gouttière orthodontique. Cette épaisseur est visible sur la figure 5. Classiquement, la gouttière présente une épaisseur sensiblement constante. La surface extérieure 24 de la gouttière, qui s'étend en face du fond 20 de la goulotte, est donc également sensiblement de même forme que le fond de la goulotte. En conséquence, sur une image, le contour de la surface extérieure 24 de la gouttière définit également un ensemble de contours de dents extérieurs 18.

Un « contour de gouttière » 28 est constitué d'un ensemble des contours de dent extérieurs 18. Il peut donc être défini par le fond 20 de la goulotte ou par la surface extérieure 24 de la gouttière.

Lorsqu'une dent est positionnée dans la goulotte de manière que son extrémité libre 22 soit en contact avec le fond de la goulotte, son contour de dent intérieur est sensiblement confondu avec le contour de dent extérieur correspondant si le contour de dent extérieur 18 est défini par le fond 20 de la goulotte, ou est écarté et sensiblement parallèle au contour de dent extérieur correspondant si le contour de dent extérieur est défini par la surface extérieure 24 de la gouttière.

De préférence, les contours de dent extérieurs utilisés pour définir le contour de gouttière 28 sont définis par la surface extérieure 24 de la gouttière, plus visible.

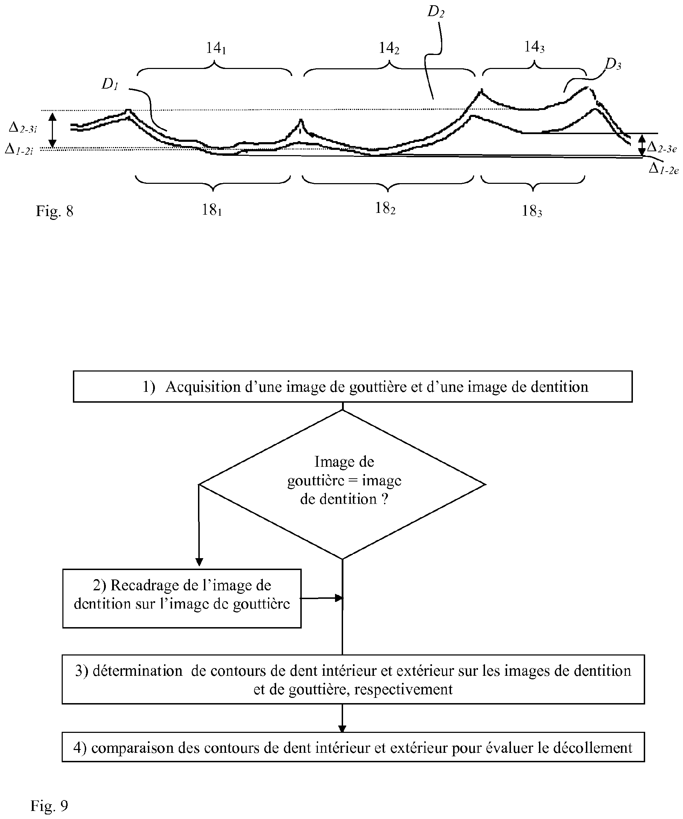

Le procédé de l'invention a pour objet de détecter les situations dans lesquelles l'extrémité libre 22 d'une dent n'est plus en contact avec le fond de la goulotte, et de mesurer l'ampleur de ce décollement (figure 9).

**A l'étape 1),** on prend au moins une image des dents, dite « image actualisée », au moyen d'un appareil d'acquisition d'images.

De préférence, au moins un rappel informant le patient de la nécessité de créer une image actualisée est adressé au patient. Ce rappel peut être sous forme papier ou, de préférence, sous forme électronique, par exemple sous la forme d'un courriel, d'une alerte automatique d'un applicatif spécialisé mobile ou d'un SMS. Un tel rappel peut être envoyé par le cabinet ou le laboratoire d'orthodontie ou par le dentiste ou par l'applicatif spécialisé mobile du patient, par exemple.

L'étape 1) est réalisée au moment où l'évaluation de la forme d'une gouttière est souhaitée, par exemple plus de 4 semaines après le début du traitement avec la gouttière.

L'appareil d'acquisition d'images est de préférence un téléphone mobile, un appareil photo dit « connecté », une montre dite « intelligente », ou « smartwatch », une tablette ou un ordinateur personnel, fixe ou portable, comportant un système d'acquisition d'images, comme une webcam ou un appareil photo.

L'acquisition est de préférence réalisée par le patient ou un proche du patient, mais peut être réalisée par toute autre personne, notamment un dentiste ou un orthodontiste, de préférence sans imposer un positionnement précis de l'appareil d'acquisition d'images par rapport aux dents.

De préférence, l'image actualisée est une photographie ou est une image extraite d'un film. Elle est de préférence en couleurs, de préférence en couleurs réelles.

Selon l'invention, on évalue la forme de la gouttière en comparant un contour de cette gouttière, dans sa position de service, avec un contour des dents qui la portent.

A l'étape 1), il est donc nécessaire d'acquérir suffisamment d'images actualisées pour autoriser cette comparaison, c'est-à-dire au moins une image de la gouttière dans sa position de service, ou « image de gouttière », et au moins une image de dents qui portent cette gouttière dans la position de service, ou « image de dentition ».

Dans un mode de réalisation, l'image de dentition est l'image de gouttière. Autrement dit, la même image actualisée permet non seulement d'apercevoir le contour de gouttière 28, mais aussi le contour de dentition 16, à travers la gouttière (figure 3). Cette seule image permet donc de comparer des contours de gouttière et de dentition. Avantageusement, l'étape 2) de recadrage, décrite ultérieurement, n'est pas nécessaire.

Dans un autre mode de réalisation, l'image de dentition est une image des dents en l'absence de la gouttière orthodontique, dite « image de dentition nue ». Ce mode de réalisation est nécessaire si le contour de dentition 16 n'est pas clairement visible, à travers la gouttière, sur l'image de gouttière. L'opérateur prend alors une première image de la gouttière en position de service, et, à un autre instant, après avoir retiré la gouttière, prend une deuxième image de dents portant la partie de la gouttière représentée sur la première image, c'est-à-dire l'image de dentition nue.

Les images actualisées étant de préférence réalisées sans précautions particulières, l'image de dentition nue n'est normalement pas acquise dans les mêmes conditions d'acquisition que l'image de gouttière. En particulier, les positions dans l'espace de l'appareil d'acquisition par rapport aux dents et/ou son réglage (« calibration » de l'appareil d'acquisition), par exemple le niveau de zoom, peuvent être différents pour acquérir ces deux images. Les contours de gouttière et de dentition définis à partir des images de dentition nue et de gouttière, respectivement, ne sont donc normalement pas immédiatement comparables. L'étape 2) est destinée à rendre ces contours comparables en redéfinissant l'image de dentition.

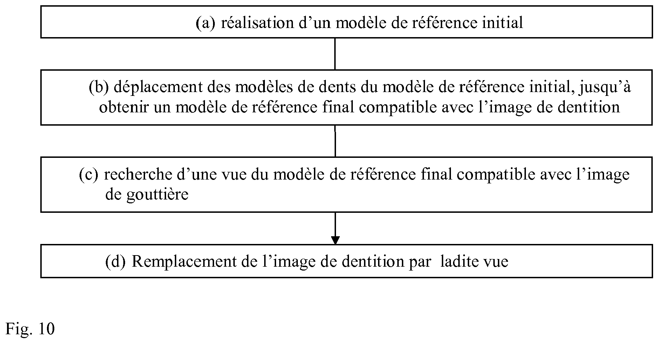

Dans un mode de réalisation particulier préféré, **l'étape 2)** (figure 10) comporte les étapes (a) à (d) :
**L'étape (a)** est antérieure à l'étape 1).

Elle est de préférence réalisée en début de traitement ou avant le début du traitement orthodontique. Elle peut être également réalisée en début de traitement ou avant le début du traitement avec la gouttière.

L'étape (a) consiste en la réalisation d'un modèle tridimensionnel numérique d'une arcade portant les dents traitées, ou « modèle de référence initial ».

Le modèle de référence initial est par exemple du type .stl ou .Obj, .DXF 3D, IGES, STEP, VDA, ou Nuages de points. Avantageusement, un tel modèle, dit « 3D », peut être observé selon un angle quelconque.

Le modèle de référence initial peut être préparé à partir de mesures effectuées sur les dents du patient ou sur un modèle physique de ses dents, par exemple un modèle en plâtre.

Le modèle de référence initial est de préférence créé au moyen d'un appareil professionnel, par exemple au moyen d'un scanner 3D, de préférence mis en œuvre par un professionnel de la santé, par exemple par un orthodontiste ou un laboratoire d'orthodontie. Dans un cabinet d'orthodontie, le patient ou le modèle physique de ses dents peuvent être avantageusement disposés dans une position précise et l'appareil professionnel peut être perfectionné. Il en résulte un modèle de référence initial très précis. Le modèle de référence initial fournit de préférence une information sur le positionnement des dents avec une erreur inférieure à 5/10 mm, de préférence inférieure à 3/10 mm, de préférence inférieure à 1/10 mm.

Dans le modèle de référence initial, une partie qui correspond à une dent est appelée « modèle de dent ». Les modèles de dents peuvent être définis comme décrit, par exemple, dans la demande internationale PCT/EP2015/074896.

**L'étape (b)** comprend une modification du modèle de référence initial, par déplacement des modèles de dents, jusqu'à retrouver un positionnement des modèles de dents compatible avec l'image de dentition.

De préférence, l'étape (b) est réalisée moins de 4 semaines, moins de 2 semaines, moins d'une semaine, de préférence sensiblement immédiatement après l'acquisition de l'image de dentition.

Elle consiste de préférence en un processus itératif selon lequel, à chaque itération, un ou plusieurs modèles de dents sont déplacés, puis des conditions d'acquisition optimales du modèle initial ainsi modifié (dit « modèle de référence à tester ») sont déterminées, les conditions optimales étant définies comme les conditions permettant d'observer le modèle de référence à tester de manière que la vue dudit modèle soit la plus proche possible de l'image de dentition.

Les étapes c) à e) décrites dans PCT/EP2015/074896 sont de préférence mises en œuvre :
c) analyse de l'image de dentition (image actualisée dans PCT/EP2015/074896) et réalisation d'une carte actualisée relative à une information discriminante ;
d) optionnellement, détermination, pour l'image de dentition, de conditions d'acquisition virtuelles grossières approximant les conditions d'acquisition réelles de ladite image de dentition ;
e) recherche, à partir de la carte actualisée, d'un modèle de référence final correspondant au positionnement des dents lors de l'acquisition de l'image de dentition, la recherche étant de préférence effectuée au moyen d'une méthode métaheuristique, de préférence évolutionniste, de préférence par recuit simulé.

Toutes les caractéristiques des étapes c) à e) décrites dans PCT/EP2015/074896 sont applicables.

Suivant l'étape c), l'image de dentition est analysée de manière à réaliser une carte actualisée relative à au moins une information discriminante.

Une "information discriminante" est une information caractéristique qui peut être extraite d'une image *("image feature"*), classiquement par un traitement informatique de cette image.

Une information discriminante peut présenter un nombre variable de valeurs. Par exemple, une information de contour peut être égale à 1 ou 0 selon qu'un pixel appartient ou non à un contour. Une information de brillance peut prendre un grand nombre de valeurs. Le traitement de l'image permet d'extraire et de quantifier l'information discriminante.

La carte actualisée représente une information discriminante dans le référentiel de l'image de dentition. L'information discriminante est de préférence choisie dans le groupe constitué par une information de contour, une information de couleur, une information de densité, une information de distance, une information de brillance, une information de saturation, une information sur les reflets et des combinaisons de ces informations.

A l'étape optionnelle d), on évalue, de manière grossière, les conditions d'acquisition réelles de l'image de dentition à l'étape 1), c'est-à-dire la position et l'orientation dans l'espace de l'appareil d'acquisition par rapport aux dents et sa calibration. L'étape d) permet avantageusement de limiter le nombre de tests sur des conditions d'acquisition virtuelles lors de l'étape e), et permet donc d'accélérer considérablement l'étape e).

On utilise de préférence une ou plusieurs règles heuristiques. Par exemple, de préférence, on exclut des conditions d'acquisition virtuelles susceptibles d'être testées à l'étape e), les conditions qui correspondent à une position de l'appareil d'acquisition d'images derrière les dents ou à une distance des dents supérieure à 1 m. Dans un mode de réalisation préféré, on utilise des marques de repérage représentées sur l'image de dentition pour déterminer une région de l'espace sensiblement conique délimitant des conditions d'acquisition virtuelles susceptibles d'être testées à l'étape e), ou "cône de test".

L'objectif de l'étape e) est de modifier le modèle de référence initial jusqu'à obtenir un modèle de référence final qui corresponde à l'image de dentition. Idéalement, le modèle de référence final est donc un modèle de référence tridimensionnel numérique à partir duquel l'image de dentition aurait pu être prise si ce modèle avait été réel.

On teste donc une succession de modèles de référence « à tester », le choix d'un modèle de référence à tester dépendant de préférence du niveau de correspondance des modèles de référence « à tester » précédemment testés avec l'image de dentition. Ce choix est de préférence effectué en suivant un procédé d'optimisation connu, en particulier choisi parmi les procédés d'optimisation métaheuristiques, de préférence évolutionnistes, en particulier dans les procédés de recuit simulé.

De préférence, l'étape e) comporte les étapes suivantes :
e1) définition d'un modèle de référence à tester comme étant le modèle de référence initial puis,
e2) suivant les étapes suivantes, test de conditions d'acquisition virtuelles avec le modèle de référence à tester afin d'approximer finement lesdites conditions d'acquisition réelles ;
   e21) détermination de conditions d'acquisition virtuelles à tester;
   e22) réalisation d'une image de référence bidimensionnelle du modèle de référence à tester dans lesdites conditions d'acquisition virtuelles à tester ;
   e23) traitement de l'image de référence pour réaliser au moins une carte de référence représentant, au moins partiellement, ladite information discriminante ;
   e24) comparaison des cartes actualisée et de référence de manière à déterminer une valeur pour une première fonction d'évaluation, ladite valeur pour la première fonction d'évaluation dépendant des différences entre lesdites cartes actualisée et de référence et correspondant à une décision de poursuivre ou de stopper la recherche de conditions d'acquisition virtuelles approximant lesdites conditions d'acquisition réelles de l'image de dentition avec plus d'exactitude que lesdites conditions d'acquisition virtuelles à tester déterminées à la dernière occurrence de l'étape e21) ;
   e25) si ladite valeur pour la première fonction d'évaluation correspond à une décision de poursuivre ladite recherche, modification des conditions d'acquisition virtuelles à tester, puis reprise à l'étape e22) ;
e3) détermination d'une valeur pour une deuxième fonction d'évaluation, ladite valeur pour la deuxième fonction d'évaluation dépendant des différences entre les cartes de dentition et de référence dans les conditions d'acquisition virtuelles approximant au mieux lesdites conditions d'acquisition réelles et résultant de la dernière occurrence de l'étape e2), ladite valeur pour la deuxième fonction d'évaluation correspondant à une décision de poursuivre ou de stopper la recherche d'un modèle de référence approximant le positionnement des dents lors de l'acquisition de l'image de dentition avec plus d'exactitude que ledit modèle de référence à tester utilisé à la dernière occurrence de l'étape e2), et si ladite valeur pour la deuxième fonction d'évaluation correspond à une décision de poursuivre ladite recherche, modification du modèle de référence à tester par déplacement d'un ou plusieurs modèles de dents, puis reprise à l'étape e2).

Les étapes e1) à e3) sont décrites en détail dans PCT/EP2015/074896, ou WO2016066651.

Le modèle de référence final obtenu à l'issue de l'étape e) est un modèle tridimensionnel résultant de modifications successives du modèle de référence initial, très précis. Avantageusement, il est ainsi lui-même très précis, bien qu'il ait été obtenu à partir de simples photographies prises sans précautions particulières.

**A l'étape (c)**, on recherche une vue du modèle de référence final qui corresponde à l'image de gouttière. Plus précisément, l'image de gouttière a été acquise dans des conditions d'acquisition réelles dans lesquelles les dents n'étaient pas suffisamment visibles. L'étape (c) a pour objectif de déterminer une vue du modèle de référence final compatible avec l'image de gouttière, c'est-à-dire une vue représentant les dents telles qu'elles auraient été représentées sur l'image de gouttière si elles avaient été suffisamment visibles.

En particulier, cette recherche conduit à virtuellement déplacer un appareil d'acquisition d'images virtuel autour du modèle de référence final jusqu'à trouver une position « recadrée » compatible avec l'image de gouttière, c'est-à-dire dans laquelle on peut observer des dents ou des parties de dents comme elles auraient été représentées sur l'image de gouttière si la gouttière avait été transparente.

De préférence, la recherche de la vue du modèle de référence final qui correspond le mieux à l'image de gouttière est effectuée par itération, de préférence au moyen d'une méthode heuristique, de préférence encore au moyen d'une des méthodes décrites ci-après. Ces méthodes permettent avantageusement de guider le déplacement virtuel de l'appareil d'acquisition d'images virtuel autour du modèle de référence final afin d'accélérer la détermination de ladite position recadrée.

Pour recadrer l'appareil d'acquisition d'images virtuel, il est nécessaire d'identifier sur l'image de gouttière des repères dont on connaît la position dans le modèle de référence final. De tels repères peuvent généralement être identifiés. A défaut, il est nécessaire d'acquérir une nouvelle image de gouttière et de reprendre la recherche de tels repères. Les repères appartiennent de préférence à des dents que l'on sait immobiles, par exemple parce qu'elles ne sont pas traitées (si de telles dents sont visibles sur l'image de gouttière) ou à des parties de la gouttière en contact avec de tels dents, et donc également immobiles. Les dents immobiles peuvent être facilement identifiées lors de l'étape (c), puisqu'il s'agit des dents dont le modèle de dent n'a pas été déplacé lors de l'étape (b).

Le recadrage nécessite d'utiliser comme repères au moins trois points non alignés.

On observe ensuite le modèle de référence final suivant différentes conditions d'acquisition virtuelles jusqu'à obtenir une vue du modèle de référence final compatible avec l'image de gouttière, c'est-à-dire dans laquelle les repères ont des positions relatives identiques. L'appareil d'acquisition d'images virtuel est alors dans la position recadrée.

**A l'étape (d)**, on remplace l'image de dentition par la vue du modèle de référence final observé dans la position recadrée, c'est-à-dire dans les conditions d'acquisition virtuelles déterminées à l'étape (c).

Le modèle de référence final représente en effet, en trois dimensions, les dents dans leur positionnement au moment où l'image de dentition a été acquise, à l'étape 1). Par ailleurs, les conditions d'acquisition virtuelles déterminées à l'étape (c) sont sensiblement identiques aux conditions d'acquisition réelles au moment où l'image de gouttière a été acquise, à l'étape 1). En observant le modèle de référence final dans les conditions d'acquisition virtuelles déterminées à l'étape (c), on observe donc les dents au moment où l'image de dentition a été acquise, dans les conditions d'acquisition de l'image de gouttière. La vue du modèle de référence final dans ces conditions d'acquisitions virtuelles est donc comparable à l'image de gouttière et remplace donc l'image de dentition acquise à l'étape 1). Dans un souci de clarté, cette vue est appelée également « image de dentition », c'est-à-dire que la vue est transformée en l'image de dentition.

Les formes et les dimensions des contours sur l'image de dentition ainsi définie sont donc comparables à celles des contours sur l'image de gouttière.

**A l'étape 3)**, on détermine pour chacune d'une pluralité de dents représentées sur les images de dentition et de gouttière, les contours de dent intérieur et extérieur.

L'homme de l'art sait comment traiter une image pour isoler un contour. Ce traitement comporte par exemple l'application de masques ou de filtres bien connus, fournis avec des logiciels de traitement d'images. De tels traitements permettent par exemple de détecter les régions de fort contraste.

Ces traitements comprennent notamment une ou plusieurs des méthodes connues et préférées suivantes, à savoir :
- par application d'un filtre Canny, notamment pour rechercher des contours en utilisant l'algorithme de Canny ;
- par application d'un filtre Sobel, notamment pour calculer des dérivées au moyen de l'opérateur étendu de Sobel;
- par application d'un filtre de Laplace, pour calculer le laplacien d'une image;
- par détection de tâches sur une image (« Blobdetecor ») ;
- par application d'un seuil (« Threshold ») pour appliquer un seuil fixe à chaque élément d'un vecteur ;
- par redimensionnement, en utilisant des relations entre les zones de pixels (« Resize(Area) ») ou des interpolations bi-cubiques sur l'environnement des pixels ;
- par érosion de l'image au moyen de d'un élément spécifique structurant ;
- par dilatation, de l'image au moyen de d'un élément spécifique structurant ;
- par retouche, en particulier en utilisant des régions au voisinage de la zone restaurée ;
- par application d'un filtre bilatéral ;
- par application d'un flou gaussien ;
- par application d'un filtre d'Otsu, pour rechercher le seuil qui minimise la variance intra-classes ;
- par application d'un filtre A*, pour rechercher un chemin entre des points ;
- par application d'un seuil adaptatif (« Adaptive Threshold ») pour appliquer un seuil adaptatif à un vecteur ;
- par application d'un filtre d'égalisation d'un histogramme d'une image en nuances de gris en particulier;
- par détection de flou ("BlurDetection"), pour calculer l'entropie d'une image en utilisant son laplacien ;
- par détection de contours (« FindContour ») d'une image binaire ;
- par remplissage de couleurs ("FloodFill"), notamment pour remplir un élément connecté avec une couleur déterminée.

Les méthodes non limitatives suivantes, bien qu'elles ne soient pas préférées, peuvent être également mises en œuvre :
- par application d'un filtre "MeanShift", de manière à trouver un objet sur une projection de l'image ;
- par application d'un filtre « CLAHE », pour « Contrast Limited Adaptive Histogram Equalization » ;
- par application d'un filtre « Kmeans", pour déterminer le centre de clusters et de groupes d'échantillons autour de clusters ;
- par application d'un filtre DFT, de manière à effectuer une transformation de Fourier discrète, directe ou inverse d'un vecteur ;
- par calcul de moments ;
- par application d'un filtre « HuMoments » pour calculer des invariants de Hu invariants ;
- par calcul de l'intégrale d'une image ;
- par application d'un filtre Scharr, permettant de calculer une dérivée de l'image en mettant en œuvre un opérateur de Scharr ;
- par recherche de l'enveloppe convexe de points ("ConvexHull") ;
- par recherche de points de convexité d'un contour ("ConvexityDefects") ;
- par comparaison de formes (« MatchShapes ») ;
- par vérification si des points sont dans un contour (« PointPolygonTest ») ; Par détection des contours Harris (« CornerHarris ») ;
- par la recherche des valeurs propres minimales de matrices de gradients, pour détecter les coins ("CornerMinEigenVal ») ;
- par application d'une transformée de Hough pour trouver des cercles dans une image en nuances de gris (« HoughCircles ») ;
- par "Active contour modeling" (traçage du contour d'un objet à partir d'une image 2D potentiellement « bruitée » ;
- par calcul d'un champ de forces, appelées GVF ("gradient vector flow"), dans une partie de l'image ;
- par classement en cascade (« CascadeClassification »).

La détermination des contours de dent peut être optimisée en suivant les enseignements de PCT/EP2015/074900.

**A l'étape 4)** de comparaison des contours, on procède de préférence suivant un des deux modes de réalisation particuliers ci-dessous, correspondant aux figures 7 et 8, respectivement :
Dans un premier mode de réalisation particulier, l'étape 4) comporte les étapes i) à iii) pour chacune d'une pluralité de dents pour lesquelles des contours de dent intérieur et extérieur ont été déterminés.

A l'étape i), on détermine une distance d entre les contours de dent intérieur et extérieur de chacune desdites dents (figure 7).

La distance entre les contours de dent intérieur 14 et extérieur 18 d'une dent peut être par exemple la distance moyenne ou la distance maximale entre les pixels desdits contours correspondant à un même point de la dent.

La distance est de préférence mesurée en pixels, ce qui avantageusement évite de devoir établir l'échelle des images de dentition et de gouttière.

A l'étape ii), on détermine un seuil de distance *Sd,* de préférence à partir des distances déterminées à l'étape i).

De préférence, à l'étape ii), le seuil de distance *Sd* est sensiblement égal à la plus faible des distances déterminées à l'étape i) (*dₘᵢₙ*). Classiquement, à l'étape 1), au moins une des dents traitées est en contact avec le fond de la goulotte dans laquelle elle est insérée. La distance entre les contours de dent intérieur et extérieur de cette dent est alors égale à une distance minimale *dₘᵢₙ* correspondant à une situation normale. Elle peut donc servir d'étalon pour évaluer, à l'étape iii), les distances entre les contours de dent intérieur et extérieur des autres dents.

A l'étape iii), on détermine, pour chacune des dents, un score dit « score en distance » *S(d,Sd),* en fonction
- de la distance d entre les contours de dent intérieur et extérieur et
- du seuil de distance *Sd.*

De préférence, le score en distance pour une dent est égal à (*d-Sd*), c'est-à-dire à la différence entre la distance entre les contours de dent intérieur et extérieur de cette dent et le seuil de distance. Plus le score en distance est élevé, plus la dent concernée est décollée de la goulotte.

La figure 7 illustre un exemple de mise en œuvre des étapes i) à iii), dans lequel une dent D1 est décollée du fond de la gouttière et telle que *d* - *dₘᵢₙ > Sd.*

Dans un deuxième mode de réalisation particulier, l'étape 4) comporte les étapes i') à iii'). A l'étape i'), on considère au moins triplet constitué de première, deuxième et troisième dents, D1, D2 et D3, respectivement, les première et troisième dents étant adjacentes à la deuxième dent, c'est-à-dire les première, deuxième et troisième dents se succédant le long d'une arcade.

On détermine les contours de dentition et de gouttière comportant les contours de dent intérieurs 14₁, 14₂ et 14₃, respectivement, et extérieurs 18₁, 18₂ et 18₃, respectivement, des dents D1, D2 et D3, respectivement.

Un « décalage » intérieur ou extérieur, respectivement, représente une distance entre les contours de dent intérieur ou extérieur, respectivement, de deux dents adjacentes.

On détermine
- un décalage entre le contour de dent intérieur de ladite première dent 14₁ et le contour de dent intérieur de ladite deuxième dent 14₂, dit « premier décalage intérieur », Δ₁₋₂i ;
- un décalage entre le contour de dent intérieur de ladite deuxième dent 14₂ et le contour de dent intérieur de ladite troisième dent 14₃, dit « deuxième décalage intérieur », Δ₂₋₃i ;
- un décalage entre le contour de dent extérieur de ladite première dent 18₁ et le contour de dent extérieur de ladite deuxième dent 18₂, dit «premier décalage extérieur », Δ₁₋₂e ;
- décalage entre le contour de dent extérieur de ladite deuxième dent 18₂ et le contour de dent extérieur de ladite troisième dent 18₃, dit « deuxième décalage extérieur », Δ₂₋₃e.

Le décalage intérieur entre les contours de dent intérieurs de deux dents adjacentes est de préférence égal à la plus grande distance entre les contours de dent intérieurs de ces deux dents sur le contour de dentition.

Le décalage extérieur entre les contours de dent extérieurs de deux dents adjacentes est de préférence égal à la plus grande distance entre les contours de dent extérieurs de ces deux dents sur le contour de gouttière.

Les décalages intérieurs et les décalages extérieurs sont de préférence mesurés en pixels, ce qui avantageusement évite de devoir établir l'échelle des images de dentition et de gouttière.

On détermine ensuite :
- la différence entre le premier décalage intérieur Δ₁₋₂i et le premier décalage extérieur Δ₁₋₂e, dite « première différence de décalages » Δ₁₋₂ (= Δ₁₋₂i - Δ₁₋₂e) ;
- la différence entre le deuxième décalage intérieur Δ₂₋₃i et le deuxième décalage extérieur Δ₂₋₃e, dite « deuxième différence de décalages » Δ₂₋₃ (= Δ₂₋₃i - Δ₂₋₃e).

Dans l'exemple de la figure 8, Δ₁₋₂ est beaucoup plus faible que Δ₂₋₃.

A l'étape ii'), on détermine un seuil de différence de décalages *S*Δ, de préférence à partir des première et deuxième différences de décalages Δ₁₋₂ et Δ₂₋₃ déterminées à l'étape i'). De préférence, à l'étape ii'), le seuil de décalage est sensiblement égal à la plus petite des différences de décalages déterminées à l'étape i').

Classiquement, à l'étape 1), au moins deux dents traitées adjacentes sont en contact avec le fond de la goulotte dans laquelle elles sont insérées. La différence de décalages entre ces deux dents traitées est alors sensiblement nulle. Cette différence de décalages nulle correspondant à une situation normale, elle peut donc servir d'étalon pour évaluer les différences de décalages entre les dents traitées adjacentes.

Sur la figure 8, la différence de décalages entre les deux dents D₁ et D₂ est sensiblement nulle.

A l'étape iii'), on détermine pour chaque couple de dents dudit triplet, au moins un score, dit « score en décalage », en fonction de la différence de décalages avec une dent adjacente à ladite dent et du seuil de différence de décalages.

En particulier, la différence de décalages de la première dent avec la deuxième dent peut être comparée au seuil de différence de décalages SΔ, par exemple de zéro. Le seuil de différence de décalages peut être notamment soustrait à la différence de décalages de la première dent avec la deuxième dent pour déterminer un score en décalage des première et deuxième dents.

Ce score en décalage indique, par exemple s'il est positif, qu'une ou chacune des première et deuxième dents est susceptible d'être décollée du fond de la goulotte.

Sur la figure 8, la différence de décalages entre les deux dents D₂ et D₃ est positive, ce qui constitue un indice de décollement de la deuxième ou de la troisième dent.

Sur la figure 8, la différence de décalages entre les deux dents D₁ et D₂ étant sensiblement nulle, la différence positive de décalages entre les deux dents D₂ et D₃ indique donc un décollement de la troisième dent.

De manière générale, quand un premier score en décalage pour des première et deuxième dents indique un décollement d'une de ces deux dents, on détermine un deuxième score en décalage pour la deuxième dent et une troisième dent adjacente à la deuxième dent. Si le deuxième score en décalage est inférieur au premier score en décalage, il est probable que c'est la première dent qui s'est décollée du fond de la goulotte. Sinon, c'est probablement la deuxième dent qui s'est décollée.

**A l'étape 5)**, une information, par exemple un avertissement, est envoyée à un opérateur, pour l'informer, le cas échéant, que la situation est anormale. L'information relative à une dent dépend du ou des scores établis à l'étape 4). De préférence, l'information comporte une valeur permettant de quantifier, pour au moins une dent, le niveau de décollement de la gouttière au-dessus de cette dent, cette valeur étant de préférence établie à partir du ou des scores calculés à l'étape 4) pour cette dent.

Dans un mode de réalisation, cette information est utilisée pour établir un diagnostic et/ou pour modifier le traitement, en particulier pour préconiser un changement de gouttière et/ou déterminer des caractéristiques d'une future gouttière pour le patient.

Comme cela apparaît clairement à présent, un procédé selon l'invention permet, à partir de simples photos ou d'un simple film, de déterminer les régions dans lesquelles la gouttière s'est écartée des dents et d'évaluer l'ampleur de ce décollement.

Bien entendu, l'invention n'est pas limitée aux modes de réalisation décrits ci-dessus et représentés, mais est limitée par les revendications suivantes. Enfin, le patient n'est pas limité à un être humain. En particulier, un procédé selon l'invention peut être utilisé pour un autre animal.

## Revendications

1. Procédé d'évaluation de la forme d'une gouttière orthodontique portée par un patient, ledit procédé comportant les étapes suivantes :
1) acquisition d'au moins une image bidimensionnelle de dents dudit patient, dite « image actualisée », dans des conditions d'acquisition réelles,
au moins une image actualisée, dite « image de gouttière », représentant au moins partiellement la gouttière dans une position de service dans laquelle elle est portée par lesdites dents;
au moins une image actualisée, dite « image de dentition », identique ou différente de l'image de gouttière, représentant lesdites dents,
2) si l'image de dentition est différente de l'image de gouttière, transformation de l'image de dentition de manière qu'elle représente lesdites dents comme observées dans les conditions d'acquisition mises en œuvre lors de l'acquisition de l'image de gouttière à l'étape 1) ;
3) détermination pour chacune d'une pluralité de dents représentées sur les images de dentition et de gouttière, de contours de dent intérieur et extérieur représentant le contour de l'extrémité libre de ladite dent sur les images de dentition et de gouttière, respectivement,
4) comparaison des contours de dents intérieur et extérieur, puis détermination d'au moins un score en fonction de ladite comparaison.

2. Procédé selon la revendication immédiatement précédente, comportant, après l'étape 4), l'étape suivante :
5) comparaison du score à un seuil d'acceptabilité et émission d'une information en fonction du résultat de la comparaison.

3. Procédé selon l'une quelconque des revendications précédentes, dans lequel les images de dentition et de gouttière sont différentes, le procédé comportant les étapes suivantes :
(a) avant l'étape 1), réalisation d'un modèle tridimensionnel numérique d'au moins une partie d'une arcade portant lesdites dents, ou « modèle de référence initial », et pour chaque dent du modèle de référence initial, définition d'un modèle de référence tridimensionnel numérique de ladite dent, ou « modèle de dent » ;
(b) modification du modèle de référence initial par déplacement des modèles de dent, jusqu'à obtention d'un modèle de référence final compatible avec l'image de dentition ;
(c) recherche d'une vue bidimensionnelle du modèle de référence final compatible avec l'image de gouttière ;
(d) transformation de l'image de dentition en ladite vue.

4. Procédé selon l'une quelconque des revendications 1 et 2, dans lequel les images de dentition et de gouttière sont une même image.

5. Procédé selon l'une quelconque des revendications précédentes, dans lequel l'étape 4) comporte les étapes suivantes :
pour chacune d'une pluralité de dents pour lesquelles des contours de dent intérieur et extérieur ont été déterminés ;
i) détermination d'une distance entre les contours de dent intérieur et extérieur ;
ii) détermination d'un seuil de distance, de préférence à partir des distances déterminées à l'étape immédiatement précédente ;
iii) pour chacune desdites dents, détermination d'un score en distance, en fonction
- de la distance entre les contours de dent intérieur et extérieur et
- du seuil de distance.

6. Procédé selon la revendication immédiatement précédente, dans lequel les distances sont mesurées en pixels.

7. Procédé selon l'une quelconque des deux revendications immédiatement précédentes, dans lequel à l'étape ii), le seuil de distance est fonction de la plus faible des distances déterminées à l'étape i).

8. Procédé selon l'une quelconque des revendications 1 à 3, dans lequel l'étape 4) comporte les étapes suivantes :
i') pour chaque couple d'une dent gauche et d'une dent droite adjacentes d'au moins triplet de première, deuxième et troisième dents adjacentes pour chacune desquelles des contours de dent intérieur et extérieur ont été déterminés, les première et troisième dents étant adjacentes à la deuxième dent,
détermination d'un décalage entre le contour de dent intérieur de ladite dent gauche et le contour de dent intérieur de ladite dent droite, dit « décalage intérieur », et détermination d'un décalage entre le contour de dent extérieur de ladite dent gauche et le contour de dent extérieur de ladite dent droite, dit « décalage extérieur »,
puis
détermination de la différence entre le décalage intérieur et le décalage extérieur, dite « différence de décalages » ;
ii') détermination d'un seuil de différence de décalages, de préférence à partir des différences de décalages déterminées à l'étape i') ;
iii') détermination, pour chaque dent dudit triplet, d'au moins un score en décalage, en fonction de la différence de décalages avec une dent adjacente et du seuil de différence de décalages ;

9. Procédé selon la revendication immédiatement précédente, dans lequel les décalages intérieurs et extérieurs sont mesurés en pixels.

10. Procédé selon l'une quelconque des deux revendications immédiatement précédentes, dans lequel à l'étape iii'), le seuil de différence de décalages est fonction de la plus petite des différences de décalages déterminées à l'étape ii').

## Patentansprüche

1. Verfahren zum Beurteilen der Form einer kieferorthopädischen Schiene, die von einem Patienten getragen wird, wobei das Verfahren die folgenden Schritte umfasst:
1) Erfassen mindestens eines zweidimensionalen Bildes von Zähnen des Patienten, "aktualisiertes Bild" genannt, unter realen Erfassungsbedingungen,
mindestens eines aktualisierten Bildes, "Schienenbild" genannt, das zumindest teilweise die Schiene in einer Einsatzstellung abbildet, in der sie von den Zähnen getragen wird;
mindestens eines aktualisierten Bildes, "Gebissbild" genannt, das identisch mit dem Schienenbild oder davon verschieden ist und die Zähne abbildet,
2) falls das Gebissbild vom Schienenbild verschieden ist, Umwandeln des Gebissbildes derart, dass es die Zähne so abbildet, wie sie unter den Erfassungsbedingungen betrachtet wurden, die beim Erfassen des Schienenbilds in Schritt 1) eingesetzt wurden;
3) Bestimmen für jede einer Vielzahl von Zähnen, die auf den Gebiss- und Schienenbildern abgebildet werden, von inneren und äußeren Zahnkonturen, die jeweils die Kontur des freien Endes des Zahns auf den Gebiss- und Schienenbildern abbilden,
4) Vergleichen der inneren und äußeren Zahnkonturen, dann Bestimmen mindestens eines Scores in Abhängigkeit von diesem Vergleich.

2. Verfahren nach dem unmittelbar vorhergehenden Anspruch, das nach dem Schritt 4) den folgenden Schritt umfasst:
5) Vergleichen des Scores mit einem Akzeptanzschwellenwert und Ausgeben einer Information in Abhängigkeit vom Ergebnis des Vergleichs.

3. Verfahren nach einem der vorhergehenden Ansprüche, bei dem die Gebiss- und Schienenbilder verschieden sind, wobei das Verfahren die folgenden Schritte umfasst:
(a) vor dem Schritt 1) Ausführen eines digitalen dreidimensionalen Modells mindestens eines Teils eines Zahnbogens, der die Zähne trägt, oder eines "Ausgangsreferenzmodells" und für jeden Zahn des Ausgangsreferenzmodells Definieren eines digitalen dreidimensionalen Referenzmodells des Zahns oder eines "Zahnmodells";
(b) Ändern des Ausgangsreferenzmodells durch Verlagern der Zahnmodelle bis zum Erhalten eines Endreferenzmodells, dass zu dem Gebissbild kompatibel ist;
(c) Suchen einer zweidimensionalen Ansicht des Endreferenzmodells, die zu dem Schienenbild kompatibel ist;
(d) Umwandeln des Gebissbildes in die Ansicht.

4. Verfahren nach einem der Ansprüche 1 und 2, bei dem die Gebiss- und Schienenbilder dasselbe Bild sind.

5. Verfahren nach einem der vorhergehenden Ansprüche, bei dem der Schritt 4) die folgenden Schritte umfasst:
für jede einer Vielzahl von Zähnen, für die innere und äußere Zahnkonturen bestimmt worden sind;
i) Bestimmen eines Abstands zwischen den inneren und äußeren Zahnkonturen;
ii) Bestimmen eines Abstandsschwellenwerts, bevorzugt ausgehend von den im unmittelbar vorhergehenden Schritt bestimmten Abständen;
iii) für jeden der Zähne Bestimmen eines abstandsbezogenen Scores in Abhängigkeit
- vom Abstand zwischen den inneren und äußeren Zahnkonturen und
- vom Abstandsschwellenwert.

6. Verfahren nach dem unmittelbar vorhergehenden Anspruch, bei dem die Abstände in Pixeln gemessen werden.

7. Verfahren nach einem der beiden unmittelbar vorhergehenden Ansprüche, bei dem im Schritt ii) der Abstandsschwellenwert vom geringsten der im Schritt i) bestimmten Abstände abhängig ist.

8. Verfahren nach einem der Ansprüche 1 bis 3, bei dem Schritt 4) die folgenden Schritte umfasst:
i') für jedes Paar aus einem benachbarten linken Zahn und rechten Zahn mindestens Dreiergruppe aus ersten, zweiten und dritten benachbarten Zähnen, für die jeweils die inneren und äußeren Zahnkonturen bestimmt worden sind, wobei der erste und der dritte Zahn zum zweiten Zahn benachbart sind,
Bestimmen einer Verschiebung zwischen der inneren Zahnkontur des linken Zahns und der inneren Zahnkontur des rechten Zahns, "innere Verschiebung" genannt, und Bestimmen einer Verschiebung zwischen der äußeren Zahnkontur des linken Zahns und der äußeren Zahnkontur des rechten Zahns, "äußere Verschiebung" genannt,
dann
Bestimmen der Differenz zwischen der inneren Verschiebung und der äußeren Verschiebung, "Verschiebungsdifferenz" genannt;
ii') Bestimmen eines Verschiebungsdifferenzschwellenwerts, bevorzugt ausgehend von den im Schritt i') bestimmten Verschiebungsdifferenzen;
iii') Bestimmen, für jeden Zahn der Dreiergruppe, mindestens eines verschiebungsbezogenen Scores in Abhängigkeit von der Verschiebungsdifferenz mit einem benachbarten Zahn und vom Verschiebungsdifferenzschwellenwert;

9. Verfahren nach dem unmittelbar vorhergehenden Anspruch, wobei die inneren und äußeren Verschiebungen in Pixeln gemessen werden.

10. Verfahren nach einem der beiden unmittelbar vorhergehenden Ansprüche, bei dem im Schritt iii') der Verschiebungsdifferenzschwellenwert von der kleinsten der im Schritt ii') bestimmten Verschiebungsdifferenzen abhängig ist.

## Claims

1. A method for evaluating the shape of an orthodontic aligner worn by a patient, said method comprising the following steps:
1) acquisition of at least one two-dimensional image of teeth of said patient, referred to as "updated image", under actual acquisition conditions;
at least one updated image referred to as "aligner image", at least partially representing the aligner in a service position in which it is worn by said teeth; and
at least one updated image referred to as "dentition image", identical to or different from the aligner image, representing said teeth,
2) if the dentition image is different from the aligner image, conversion of the dentition image so that it represents said teeth as seen under the acquisition conditions used during the acquisition of the aligner image in step 1);
3) determination, for each of a plurality of teeth represented on the dentition and aligner images, of interior and exterior tooth outlines representing the outline of the free end of said tooth on the dentition and aligner images, respectively;
4) comparison of the interior and exterior tooth outlines, followed by determination of at least one score according to said comparison.

2. The method according to the immediately preceding claim, comprising, after step 4), the following step:
5) comparison of the score against an acceptability threshold and the emission of information according to the result of the comparison.

3. The method according to any one of the preceding claims, in which the dentition and aligner images are different, the method comprising the following steps:
(a) prior to step 1), the creation of a digital three-dimensional model of at least part of a dental arch bearing said teeth, or "initial reference model" and, for each tooth of the initial reference model, definition of a digital three-dimensional reference model of said tooth, or "tooth model";
(b) modification of the initial reference model by moving the tooth models until a final reference model compatible with the dentition image is obtained;
(c) search for a two-dimensional view of the final reference model that is compatible with the aligner image;
(d) conversion of the dentition image into said view.

4. The method according to any one of claims 1 and 2, in which the dentition and aligner images are the same image.

5. The method according to any one of the preceding claims, in which step 4) comprises the following steps:
for each of a plurality of teeth for which the interior and exterior tooth outlines have been determined;
i) determination of a distance between the interior and exterior tooth outlines;
ii) determination of a distance threshold, preferably using the distances determined in the immediately preceding step;
iii) for each of said teeth, determination of a distance score dependent on
- the distance between the interior and exterior teeth outlines, and
- the distance threshold.

6. The method according to the immediately preceding claim, in which the distances are measured in pixels.

7. The method according to any one of the two immediately preceding claims, in which, in step ii), the distance threshold is dependent on the smallest of the distances determined in step i).

8. The method according to any one of claims 1 to 3, in which step 4) comprises the following steps:
i') for each pair of an adjacent left-hand tooth and of an adjacent right-hand tooth in at least a triplet of adjacent first, second and third teeth, for each of which interior and exterior tooth outlines have been determined, the first and third teeth being adjacent to the second tooth,
determination of an offset between the interior teeth outline of said left-hand tooth and the interior teeth outline of said right-hand tooth, referred to as "interior offset", and determination of an offset between the exterior teeth outline of said left-hand tooth and the exterior teeth outline of said right-hand tooth, referred to as the "exterior offset", then
determination of the difference between the interior offset and the exterior offset, known as the "offset difference";
ii') determination of an offset-difference threshold, preferably using the offset differences determined in step i');
iii') the determination, for each tooth of said triplet, of at least one offset score, dependent on the offset difference with an adjacent tooth, and on the offset-difference threshold.

9. The method according to the immediately preceding claim, in which the interior and exterior offsets are measured in pixels.

10. The method according to any one of the two immediately preceding claims, in which, in step iii'), the offset-difference threshold is dependent on the smallest of the offset differences determined in step ii').
